(19) Europäisches Patentamt / European Patent Office / Office européen des brevets

(11) **EP 4 515 196 B1**

(12) **EUROPEAN PATENT SPECIFICATION**

(45) Date of publication and mention
of the grant of the patent:
**03.12.2025 Bulletin 2025/49**

(21) Application number: **22727043.6**

(22) Date of filing: **29.04.2022**

(51) International Patent Classification (IPC):
***G01M 3/04*** *(2006.01)*

(52) Cooperative Patent Classification (CPC):
**G01M 13/04**

(86) International application number:
**PCT/EP2022/061559**

(87) International publication number:
**WO 2023/208370 (02.11.2023 Gazette 2023/44)**

(54) **ESTIMATION SYSTEM AND METHOD**

SCHÄTZSYSTEM UND -VERFAHREN

SYSTÈME ET PROCÉDÉ D'ESTIMATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.03.2025 Bulletin 2025/10**

(73) Proprietor: **Aktiebolaget SKF
415 50 Göteborg (SE)**

(72) Inventors:
• **LUGT, Pieter Martin
4133 TA Vianen (NL)**
• **CHATRA KALSANKA RAMAKRISHNA, Sathwik
3434DL Nieuwegein (NL)**
• **OSARA, Jude Asuelimen
7533 AS Enschede (NL)**

(74) Representative: **Kohl, Thomas
SKF GmbH
Gunnar-Wester-Strasse 12
97421 Schweinfurt (DE)**

(56) References cited:
**EP-B1- 2 283 336        EP-B1- 2 539 679
US-A1- 2019 234 463**

• **CHATRA K R SATHWIK ET AL: "Channeling
behavior of lubricating greases in rolling
bearings: Identification and characterization",
TRIBOLOGY INTERNATIONAL, ELSEVIER LTD,
AMSTERDAM, NL, vol. 143, 4 November 2019
(2019-11-04), XP086011401, ISSN: 0301-679X,
[retrieved on 20191104], DOI: 10.1016/
J.TRIBOINT.2019.106061**

**Description**

The present invention relates to an estimation system for estimating the service life of a grease lubricated bearing according to claim 1. The present invention further relates to an estimation method for estimating the service life of a grease lubricated bearing according to claim 10.

The service life of grease lubricated bearings, for example rolling element bearings, depends on the condition of the grease within the bearing. When the grease condition deteriorates, the lubrication within the bearing deteriorates which in turn may lead to more friction in the bearing and thus to higher temperatures and wear of the bearing and its components. This may be particularly critical when the grease within the bearing cannot be refilled or replaced.

The grease life is determined by chemical and mechanical degradation of the grease. Chemical degradation may be for example oxidation and is deterministic. Mechanical degradation on the other hand is given by the stresses on the grease, which are determined by flow and the flow properties of the grease. This flow is non-linear but has a chaotic component and depends on the initial filling of the bearing. It is impossible to fill a bearing with grease exactly the same way twice. Thus, it cannot be predicted whether the grease within the bearing behaves the same as the grease within a similar bearing. Minute variations in the filling have an impact on the flow and the formation of grease reservoirs in the bearing which are different for each bearing and each filling. This reservoir formation and macroscopic flow of the grease happens in the so-called churning phase.

After the initial filling or after relubrication, the grease will be located between the rolling elements of a rolling element bearing, leading to high churning losses during start-up or running-in. During this phase, also called the churning phase, the grease will be pushed into the unswept volume of the bearing (onto seals or onto bearing ring shoulders) or will end up attached to a cage located between the inner and the outer ring of the bearing. From these locations, serving as reservoirs, the grease will slowly provide the raceways with lubricant by either bleeding or shear. In this second phase, the bleeding phase, the raceways or running tracks of the bearing are fed by grease from the reservoirs but also lose lubricant due to side flow and oxidation. This may lead to starvation, especially in sealed bearings where the grease reservoirs are smaller. Another feed mechanism is occasional replenishment caused by softening of the grease close to the contacts due to local heat development, which is again caused by occasional film breakdown. At some point, the reservoirs may be empty or deteriorated to the point that replenishment can no longer happen. If relubrication has not taken place, severe film breakdown will result, called the end of grease life, which subsequently leads to bearing damage and failure. However, until now, it is impossible to predict the end of the grease life and thus of the service life of an individual bearing.

The EP 2 539 679 B1 deals with the determining a bearing condition of a bearing of an electrical machine. Thereby a measured value is determined by means of a sensor unit. The measured value is transmitted to a simulation unit, wherein a result value is determined which is in particular a bearing current value or a value dependent on the bearing current.

The article "Channeling behavior of lubricating greases in rolling bearings: Identification and characterization", of S. Chatra K. R. and P. M. Lugt, in Tribology International 143 (2020) deals with the length of the churning phase of different greases in rolling bearings and correlated microstructural changes of the greases.

The EP 2 283 336 B1 deals with predicting when a grease in a grease-lubricated rolling element bearing will reach an unacceptable condition. A time series of a parameter is measured, recorded and extrapolated being indicative of a degree of breakdown of a lubricant film separating the rolling contacts. This can be used to predict a relubrication interval for the bearing.

The US 2019/0234463 A1 deals with a grease-lubricated rolling bearing comprising a temperature and a speed sensor, whereby a used and/or remaining period of the grease lifetime is calculated from the profiles of the sensed temperature and speed over time a via a calculated energy imposed on the grease.

It is therefore object of the present invention to provide an estimation system and method which provide the possibility to reliable estimate a service life of a grease lubricated bearing.

This object is solved by an estimation system for estimating the service life of a grease lubricated bearing according to claim 1 and an estimation method for estimating the service life of a grease lubricated bearing according to claim 10.

As already described above, the service life of a grease lubricated bearing heavily depends on the lifetime of the grease within the bearing. Before the start of bearing operation, the grease is fresh and new and is usually located in-between the rolling elements. As soon as rotation starts, grease starts to flow. A portion of the grease flows next to the running track and stays there due to the grease consistency and another portion flows inside the bearing, ending up on cage bars (when a cage is used). At some point, the grease becomes semi-stationary, forming grease reservoirs from where bleed takes place.

The grease lubrication process in bearings running under constant controlled conditions can be roughly divided into two phases, the churning and the bleeding phase as already mentioned above. During the churning phase, the balls in a running bearing usually form a channel of grease. This process is called "channeling". Next, the raceways are cleared of grease, after which the churning phase is finished. The process of forming the channel and clearing the raceway may take from an hour to 24 hours or longer, depending on the percentage of filling, operating conditions, bearing geometry, and the rheological properties of the grease. During this phase, grease can degrade heavily on the running tracks or raceways. The film thickness in this phase may vary depending on the rheological properties of the grease. However, fully flooded conditions prevail where both the thickener and base oil enter the contact. The formed grease reservoirs on the cage bars/pockets and shields/seals may contribute to the process of lubrication by supplying base oil to the contacts via bleeding, i.e., during the bleeding phase. The grease in the reservoirs e.g., on the shields, cage bars and bearing shoulders, bleeds oil to the contacts driven by capillary forces, surface tension and centrifugal forces.

Grease bleed changes due to grease aging during the churning phase, wherein the change in bleed rate depends on the type of clearing behavior. During the process of channeling in the churning phase, grease will be pushed forward and sideways from the swept volume to the unswept volume of the bearing. The grease that moves to the unswept area, may flow back again into the swept area until the process of clearing is finished. The duration of the process, i.e., of the churning phase, varies. The high drag forces during the churning phase lead to high temperatures and the combination of high temperature and shear results in thermo-mechanical degradation of the grease during the churning phase.

The herein described estimation system is based on the fact that the length of the churning phase has an impact on grease aging and thus on the service life or lifetime of the grease and thus of the corresponding bearing. With respect to the above events during the churning phase and the corresponding (shear) forces and temperatures, it has been discovered that a short churning period results in less grease degradation, whereas a longer churning period results in severe grease degradation. This is the case as, when the churning phase is longer, the grease within a bearing experiences higher temperatures as well as shear forces and other forces for a longer period compared to a shorter churning phase. This means that due to the high temperature and long period of shearing during the churning process, the grease life will be shortened due to thermo-mechanical aging. This long churning process impacts the grease performance via changes in rheology and bleed properties. In addition, it will cause grease leakage from the bearing, further reducing its effectiveness.

Regarding the above, the estimation system for estimating the service life of the grease lubricated bearing comprises a processing unit for determining the duration of the churning phase of the grease lubricated bearing. Depending on the determined duration of the churning phase, the processing unit can then estimate a service life of the grease lubricated bearing. In particular, the processing unit can determine a relative duration of the service life of the grease lubricated bearing, for example compared to the duration of a service life of a reference bearing. Preferably, the processing unit may be configured to determine a degradation of the grease during the churning phase and to estimate, based on the degradation of the grease, a lifetime of the grease and thus of the corresponding bearing.

According to an embodiment, the processing unit is configured to compare the determined duration of the churning phase with an average duration of the churning phase of similar grease lubricated bearings for estimating the service life. As explained above, the processing unit may determine a relative length of the service life instead of an absolute length of the service life. In particular, the processing unit can estimate whether the service life of the current bearing is shorter or longer than the service life of similar bearings based on a comparison of the respective durations of the churning phases.

According to a further embodiment, the estimation system further comprises a measuring unit for measuring at least one parameter of the grease lubricated bearing, wherein the at least one parameter is a temperature of the grease lubricated bearing, a friction torque of the grease lubricated bearing, a speed of the grease lubricated bearing and/or a thermo-mechanical energy imposed on the grease of the grease lubricated bearing. The simplest determination of the duration of the churning phase is based solely on the temperature. In this case, the measuring unit may be a temperature sensor being attached to the bearing which measures for example the temperature of the inner ring, the outer ring, or the grease of the bearing.

As the temperature rises with the beginning of the churning phase (inter alia due to the higher forces as described above) and falls with the end of the churning, the measured temperature may be used for determining the duration of the churning phase. Thus, according to a further embodiment, the processing unit is configured to determine an end of the churning phase when the measured temperature is below a predefined threshold temperature. This predefined threshold temperature may be based on similar reference bearings.

When other parameters than the temperature are to be measured, the measuring unit may be any kind of sensor being able to measure the corresponding parameter either directly or indirectly or may be a combination of sensors. For example, the measuring unit may be a speed sensor, a torque measuring device or an energy measuring device. When the parameter may not be measured directly, the measuring unit may be configured to measure other parameters which may be used for calculating the required parameters.

According to a further embodiment, the processing unit is configured to determine the duration of the churning phase in combination with the amount of thermo-mechanical energy. The thermo-mechanical energy which works on the grease during the churning phase influences the degradation of the grease. When the thermo-mechanical energy during the churning phase is high, this results in an earlier failure than when the thermo-mechanical energy during the churning phase is lower. Thus, a combination of determining the duration of the churning phase as well as thermo-mechanical energy during the churning phase provides a more accurate estimation of the service life of the bearing.

In one embodiment, in order to determine the amount of thermo-mechanical energy, the measuring unit may be configured to measure a plurality of temperature values and the processing unit may be configured to calculate a temperature change based on the plurality of temperature values and to calculate the thermo-mechanical energy by integrating the calculated temperature change.

$$E' = \int_0^{t_1} (T - T_r) 2^{\left(\frac{T-T_0}{T_A}\right)} dt \qquad (1)$$

Here, T is the temperature, measured on the outer ring of the bearing, $T_r$ is the temperature during the bleed phase and $T_0$ is a reference temperature and $T_A$ is the Arrhenius temperature (which is grease type dependent).

In a further embodiment, the processing unit may be configured to calculate the thermo-mechanical energy based on the measured friction torque and speed. The measured friction torque can then be multiplied by the speed, resulting in the power imposed on the bearing. The power multiplied by the duration of the churning phase results in the thermo-mechanical energy, being the main factor for degrading the grease (see also below equations).

In another embodiment, the processing unit may be configured to calculate the thermo-mechanical energy based on the measured temperature and speed. In this case, instead of measuring the friction torque (for example when not possible), the temperature is measured and then the friction torque can be calculated based on the measured temperature.

In this case, the friction torque can be derived from the measured temperature signal via the thermal energy balance. The increase in running bearing temperature (from the initial ambient temperature) occurs primarily via heat generation which is given by the bearing's power loss. The temperature change (°C) is given by

$$\Delta T = \frac{P}{W_S} \qquad (1)$$

where P is the bearing power loss (W); $W_s$ is the cooling factor (J/s °C). For every combination of bearing and grease, only one average cooling factor is needed. The average cooling factor $(W_s)$ can be calculated using a temperature increase during the bleeding phase (i.e., wait until the churning phase is over and measure the bearing temperature) for which the power loss $P_{bleed}$ is readily evaluated, considering friction losses in the Elasto-Hydrodynamic Lubrication contacts (so called EHL friction), as

$$P_{bleed} = 1.05 \times 10^{-4} M'n \qquad (3)$$

where $M'$ is the friction torque of the bearing (Nmm) and $n$ is the rotational speed (rpm). The friction torque is a function of temperature and may be given by the equations

$$M' = (\emptyset_{ish} \times \emptyset_{rs} \times M_{rr} + M_{sl}) \times 10^{-3} \qquad (4)$$

$$M' = (\emptyset_{ish} \times \emptyset_{rs} \times G_{rr}(vn)^{0.6} + G_{sl} \times \mu_{sl}) \times 10^{-3} \qquad (5)$$

$$M' \times 10^{-3} = \frac{1}{1+1.84\times10^{-9}(ndm)^{1.28}v^{0.64}} \times \frac{1}{e^{Krs \times vn(d+D) \times \frac{\sqrt{K_z}}{2(d-D)}}} \times G_{rr}(vn)^{0.6} + G_{sl} \times \mu_{sl} \qquad (6)$$

$$M' \times 10^{-3} = G_{rr} \times n^{0.6} \times \frac{1}{1+1.84\times10^{-9}(ndm)^{1.28}v^{0.64}} \times \frac{1}{e^{Krs \times vn(d+D) \times \frac{\sqrt{K_z}}{2(d-D)}}} \qquad (7)$$

where

$\emptyset_{ish}$ is the inlet shear heating reduction factor
$\emptyset_{rs}$ is the kinematic replenishment/starvation reduction factor
$M_{rr}$ is the rolling frictional moment (Nmm)

$M_{sl}$ is sliding frictional moment (Nmm)

$v$ is the kinematic viscosity of base oil at operating temperature, calculated using Walther's equation (26).

$n$ is the rotational speed (rpm)

$\mu_{sl}$ is the sliding friction coefficient, it is 0.05

$d$ is the bearing inner diameter (20 mm)

$D$ is the bearing outer diameter (47 mm)

$d_m$ is the mean diameter of the bearing

$K_{rs}$ is the replenishment or starvation constant, for greases it is $6\times10^{-8}$

$K_z$ is the bearing type related geometric constant; for Deep Groove Ball Bearing (DGBB),

$K_z = 3.1$

$G_{rr}$ is the variable defined by the equation $G_{rr} = R_1 d_m^{1.96} F_r^{0.54})$ ) for the axial load of zero Newton

$R_1$ is the geometry constant with the value of $3.9\times10^{-7}$ for 6204 bearings

$F_r$ is the radial force applied in Newton

$G_{sl}$ is the variable defined by the equation ( $G_{sl} = S_1 d_m^{-0.26} F_r^{5/3}$ ) for the axial load of zero Newton

$S_l$ is the geometry constant with the value of $3.23\times10^{-3}$ for 6204 bearings

Having the cooling factor $W_s$, the temperatures that were measured during the churning phase can be used again and the total power can be calculated as a function of time:

$$P_{total} = W_S \Delta T \tag{8}$$

Then the churning power may be calculated as the difference between the total power and the EHL power in the bleeding phase, that is, $P_{chu} = P_{total} - P_{bleed}$. The mechanical degradation process is accelerated by heat. The churning power may be corrected for temperature by multiplying $P_{chu}$ with a factor $C_T$ obtained via the Arrhenius equation:

$$C_T = 2^{\left(\frac{T-T_0}{15}\right)} \tag{9}$$

where $T$ is the measured temperature and $T_0 = 40°C$ is the reference temperature. Equation (9) normalizes the churning power to the same reference temperature. The Arrhenius temperature is $T_a = 15°C$.

The accumulated churning energy E is the power integrated in time:

$$E = \int_0^{t_{chu}} C_T P_{chu}\, \mathrm{d}t \tag{10}$$

where $P_{chu}$ is the power induced in the grease by churning and $t$ is the churning time, integral starts at $t=0$ and $t_{chu}$ is the churning duration. The energy density during churning, in J/mm³, is calculated by dividing the churning energy (equation 10) by the grease volume in the bearing $V_g$, giving

$$E_V = \frac{E}{V_g} \tag{11}$$

This energy density Ev may then be used as an indicator to estimate the service life of the bearing, in particular by comparing the calculated energy density, i.e., the thermo-mechanical energy, with other energy densities of reference bearings.

Thus, as described above, the processing unit may determine the thermo-mechanical energy during the churning phase of the grease lubricated bearing and estimate the service life of the grease lubricated bearing based on the determined temperature corrected energy. In particular, the processing unit may determine the thermo-mechanical energy by measuring the duration of the churning phase and integrating the power, corrected for temperature using the Arrhenius equation during the churning phase, and may estimate the service life of the grease lubricated bearing based on the determined corrected energy.

In a further embodiment, when the grease lubricated bearing is arranged in an electric motor, the measuring unit may measure the torque from the electrical current to the electric motor, and the processing unit may integrate the power caused by churning derived from the motor current, corrected for temperature using the Arrhenius equation (see above) during the churning phase and estimate the service life of the grease lubricated bearing based on the determined corrected energy.

In a further embodiment, the processing unit is configured to determine an amount of entropy generation during the churning phase based on the measured temperature. Thus, according to this embodiment, instead of calculating the temperature corrected energy, as described above, the processing unit is configured to calculate the entropy generation during the churning phase and to estimate the service life based on the calculated entropy generation.

According to a further aspect of the invention, an estimation method for estimating the service life of a grease lubricated bearing is proposed. The estimation method comprises determining a duration of a churning phase of the grease lubricated bearing and estimating a service life of the grease lubricated bearing based on the determined duration of the churning phase.

The features and advantages described with reference to the estimation system also applies to the estimation method.

An even further aspect of the present invention relates to a computer program product comprising a computer program code which is adapted to prompt a control unit, e.g., a computer, and/or a computer of the above discussed estimation system to perform the above discussed steps.

The computer program product may be a provided as memory device, such as a memory card, USB stick, CD-ROM, DVD and/or may be a file which may be downloaded from a server, particularly a remote server, in a network. The network may be a wireless communication network for transferring the file with the computer program product.

Further preferred embodiments are defined in the dependent claims as well as in the description and the figures. Thereby, elements described or shown in combination with other elements may be present alone or in combination with other elements without departing from the scope of protection.

In the following, preferred embodiments of the invention are described in relation to the drawings, wherein the drawings are exemplarily only, and are not intended to limit the scope of protection. The scope of protection is defined by the accompanied claims, only.

The figure shows:

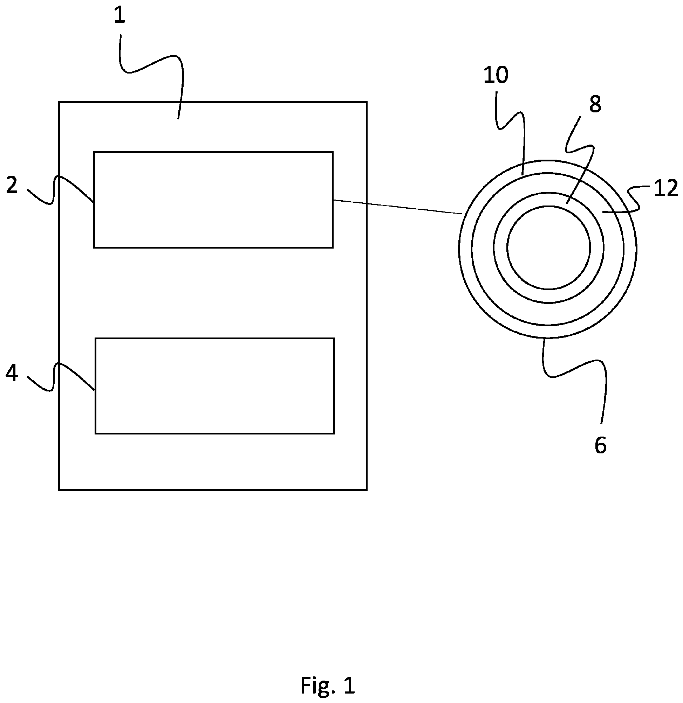

Fig. 1: a schematic view of an estimation system for estimating the service life of a bearing.

In the following same or similar functioning elements are indicated with the same reference numerals.

Fig. 1 shows an estimation system 1 for estimating the service life of a grease lubricated bearing 6. The bearing 6 comprises an inner ring 8 and an outer ring 10. Between the inner and the outer ring 8, 10, rolling elements may be arranged (not shown). The bearing 6 is lubricated with grease 12, being filled in between the inner and the outer ring 8, 10.

As explained above, the lubrication process can be roughly divided into two phases: the churning phase and the bleeding phase. During the first few minutes of the churning phase, the rolling elements push most of the grease away from the swept area into the unswept area forming a grease channel. Therefore, this process is called "channeling". After channeling, continuous bearing operation clears the remaining grease 12 on the tracks; this phase which takes several hours is therefore called the "clearing phase".

During both channeling and clearing, macroscopic grease flow takes place, and the bearing frictional torque is dominated by drag losses leading to relatively high temperature. High shear in combination with high temperature leads to grease degradation during this phase, which takes only up to a few hours compared to the much longer grease life. Once churning is over, starved lubrication will prevail and there will be hardly any macroscopic flow of grease, leading to low friction and therefore low bearing temperature. Note that there may still be creep flow and events by which some grease will be sheared. However, the overall grease flow rates will be very low during this post-churning phase and the specific degradation rate will hence also be very low. Much of the total degradation will therefore happen during the churning phase. This degradation will have an impact on the lubrication properties and performance of the grease as well as on the service life of the bearing 6. After all, the end of this (churning) phase is the start of the very long bleed phase.

In order to provide an estimation of the service life of the bearing 6, the illustrated estimation system 1 comprises a measuring unit 2 and a processing unit 4. As described above, the duration of the churning phase has an impact on the grease aging and thus on the service life of the bearing 6. The processing unit 4 is thus configured to determine a duration of the churning phase of the grease lubricated bearing 6 and to estimate a service life of the bearing 6 based on the determined duration of the churning phase.

The determination of the duration of the churning phase may be based on different parameters, like temperature (in particular of the outer ring 10), speed of the bearing 6, friction torque and/or thermo-mechanical energy. These parameters may be measured by the measuring unit 2 which may comprise one or more sensors for measuring these parameters.

The processing unit 4 may determine the duration of the churning phase in particular based on an evaluation of the temperature or temperature changes. Further, after determination of the duration of the churning phase, the processing unit 4 compares the determined duration with an average duration of the churning phase of similar grease lubricated bearings for estimating the service life of the current bearing 6.

In addition to the duration of the churning phase, the processing unit may also calculate the thermo-mechanical energy imposed on the grease 12 of the grease lubricated bearing 6. The combination of duration of the churning phase as well as the thermo-mechanical energy during the churning phase provides a more accurate estimation of the service life of the bearing 6.

In summary, the herein described estimation system and method provide an easy approach for estimating the service life of a bearing based on the duration of the churning phase.

## Reference numerals

1 estimation system
2 measuring unit
4 processing unit
6 grease lubricated bearing
8 inner ring
10 outer ring
12 grease

## Claims

1. Estimation system (1) for estimating the service life of a grease lubricated bearing (6), **characterized in that** the estimation system (1) comprises a processing unit (4) for determining a duration of a churning phase of the grease lubricated bearing (6) and for estimating a service life of the grease lubricated bearing (6) based on the determined duration of the churning phase.

2. Estimation system (1) according to claim 1, wherein the processing unit (4) is configured to compare the determined duration of the churning phase with an average duration of the churning phase of similar grease lubricated bearings (6) for estimating the service life.

3. Estimation system (1) according to any one of the preceding claims, further comprising a measuring unit (2) for measuring at least one parameter of the grease lubricated bearing (6), wherein the at least one parameter is a temperature of the grease lubricated bearing (6), a friction torque of the grease lubricated bearing (6), a speed of the grease lubricated bearing (6) and/or a thermo-mechanical energy imposed on the grease (12) of the grease lubricated bearing (6).

4. Estimation system (1) according to claim 3, wherein the processing unit (4) is configured to determine an amount of thermo-mechanical energy during the churning phase.

5. Estimation system (1) according to claim 3 or 4, wherein the measuring unit (2) is configured to measure a plurality of temperature values and wherein the processing unit (4) is configured to calculate a temperature change based on the plurality of temperature values and to calculate the thermo-mechanical energy by integrating the calculated temperature change.

6. Estimation system (1) according to claim 3 or 4, wherein the processing unit (4) is configured to calculate the thermo-mechanical energy based on the measured temperature and speed.

7. Estimation system (1) according to claim 3 or 4, wherein the processing unit (4) is configured to calculate the thermo-mechanical energy based on the measured friction torque and speed.

8. Estimation system (1) according to claim 3, wherein the processing unit (4) is configured to determine an amount of entropy generation during the churning phase based on the measured temperature.

9. Estimation system (1) according to any one of claims 3 to 8, wherein the processing unit (4) is configured to determine an end of the churning phase when the measured temperature is below a predefined threshold temperature.

10. Estimation method for estimating the service life of a grease lubricated bearing (6) carried out by a processing unit (4), **characterized in that** the estimation method comprises determining a duration of a churning phase of the grease lubricated bearing (6) and estimating a service life of the grease lubricated bearing (6) based on the determined duration of the churning phase.

**Patentansprüche**

1.  Schätzsystem (1) zum Schätzen der Lebensdauer eines fettgeschmierten Lagers (6), **dadurch gekennzeichnet, dass** das Schätzsystem (1) eine Verarbeitungseinheit (4) zum Bestimmen einer Dauer einer Walkphase des fettgeschmierten Lagers (6) und zum Schätzen einer Lebensdauer des fettgeschmierten Lagers (6) basierend auf der bestimmten Dauer der Walkphase umfasst.

2.  Schätzsystem (1) nach Anspruch 1, wobei die Verarbeitungseinheit (4) dazu ausgestaltet ist, zum Schätzen der Lebensdauer die bestimmte Dauer der Walkphase mit einer durchschnittlichen Dauer der Walkphase ähnlicher fettgeschmierter Lager (6) zu vergleichen.

3.  Schätzsystem (1) nach einem der vorangehenden Ansprüche, das ferner eine Messeinheit (2) zum Messen wenigstens eines Parameters des fettgeschmierten Lagers (6) umfasst, wobei der wenigstens eine Parameter eine Temperatur des fettgeschmierten Lagers (6), ein Reibungsmoment des fettgeschmierten Lagers (6), eine Geschwindigkeit des fettgeschmierten Lagers (6) und/oder eine thermomechanische Energie, die auf das Fett (12) des fettgeschmierten Lagers (6) einwirkt, ist.

4.  Schätzsystem (1) nach Anspruch 3, wobei die Verarbeitungseinheit (4) dazu ausgestaltet ist, eine Menge an thermomechanischer Energie während der Walkphase zu bestimmen.

5.  Schätzsystem (1) nach Anspruch 3 oder 4, wobei die Messeinheit (2) dazu ausgestaltet ist, eine Mehrzahl von Temperaturwerten zu messen, und wobei die Verarbeitungseinheit (4) dazu ausgestaltet ist, basierend auf der Mehrzahl von Temperaturwerten eine Temperaturänderung zu berechnen und durch Integrieren der berechneten Temperaturänderung die thermomechanische Energie zu berechnen.

6.  Schätzsystem (1) nach Anspruch 3 oder 4, wobei die Verarbeitungseinheit (4) dazu ausgestaltet ist, die thermomechanische Energie basierend auf der gemessenen Temperatur und Geschwindigkeit zu berechnen.

7.  Schätzsystem (1) nach Anspruch 3 oder 4, wobei die Verarbeitungseinheit (4) dazu ausgestaltet ist, die thermomechanische Energie basierend auf dem/r gemessenen Reibungsmoment und Geschwindigkeit zu berechnen.

8.  Schätzsystem (1) nach Anspruch 3, wobei die Verarbeitungseinheit (4) dazu ausgestaltet ist, basierend auf der gemessenen Temperatur ein Maß der Entropieerzeugung während der Walkphase zu bestimmen.

9.  Schätzsystem (1) nach einem der Ansprüche 3 bis 8, wobei die Verarbeitungseinheit (4) dazu ausgestaltet ist, ein Ende der Walkphase zu bestimmen, wenn die gemessene Temperatur unter einer vordefinierten Schwellentemperatur liegt.

10. Schätzverfahren zum Schätzen der Lebensdauer eines fettgeschmierten Lagers (6), das durch eine Verarbeitungseinheit (4) durchgeführt wird, **dadurch gekennzeichnet, dass** das Schätzverfahren das Bestimmen einer Dauer einer Walkphase des fettgeschmierten Lagers (6) und das Schätzen einer Lebensdauer des fettgeschmierten Lagers (6) basierend auf der bestimmten Dauer der Walkphase umfasst.

**Revendications**

1.  Système d'estimation (1) destiné à estimer la durée de vie d'un roulement lubrifié à la graisse (6), le système d'estimation (1) étant **caractérisé en ce qu'**il comprend une unité de traitement (4) destinée à déterminer la durée d'une phase de brassage du roulement lubrifié à la graisse (6) et à estimer la durée de vie du roulement lubrifié à la graisse (6) sur la base de la durée déterminée de la phase de brassage.

2.  Système d'estimation (1) selon la revendication 1, dans lequel l'unité de traitement (4) est configurée pour comparer la durée déterminée de la phase de brassage à une durée moyenne de la phase de brassage de roulements lubrifiés à la graisse (6) similaires afin d'estimer la durée de vie.

3.  Système d'estimation (1) selon l'une quelconque des revendications précédentes, comprenant en outre une unité de mesure (2) destinée à mesurer au moins un paramètre du roulement lubrifié à la graisse (6), l'au moins un paramètre étant une température du roulement lubrifié à la graisse (6), un couple de frottement du roulement lubrifié à la graisse (6), une vitesse du roulement lubrifié à la graisse (6) et/ou une énergie thermomécanique imposée à la graisse (12) du roulement lubrifié à la graisse (6).

4. Système d'estimation (1) selon la revendication 3, dans lequel l'unité de traitement (4) est configurée pour déterminer une quantité d'énergie thermomécanique durant la phase de brassage.

5. Système d'estimation (1) selon la revendication 3 ou 4, dans lequel l'unité de mesure (2) est configurée pour mesurer une pluralité de valeurs de température, et dans lequel l'unité de traitement (4) est configurée pour calculer une variation de température sur la base de la pluralité de valeurs de température et pour calculer l'énergie thermomécanique par intégration de la variation de température calculée.

6. Système d'estimation (1) selon la revendication 3 ou 4, dans lequel l'unité de traitement (4) est configurée pour calculer l'énergie thermomécanique sur la base de la température et de la vitesse mesurées.

7. Système d'estimation (1) selon la revendication 3 ou 4, dans lequel l'unité de traitement (4) est configurée pour calculer l'énergie thermomécanique sur la base du couple de frottement et de la vitesse mesurés.

8. Système d'estimation (1) selon la revendication 3, dans lequel l'unité de traitement (4) est configurée pour déterminer une quantité de génération d'entropie durant la phase de brassage sur la base de la température mesurée.

9. Système d'estimation (1) selon l'une quelconque des revendications 3 à 8, dans lequel l'unité de traitement (4) est configurée pour déterminer la fin de la phase de brassage lorsque la température mesurée est inférieure à une température seuil prédéfinie.

10. Procédé d'estimation destiné à estimer la durée de vie d'un roulement lubrifié à la graisse (6), mis en œuvre par une unité de traitement (4), le procédé d'estimation étant **caractérisé en ce qu'**il comprend la détermination de la durée d'une phase de brassage du roulement lubrifié à la graisse (6) et l'estimation de la durée de vie du roulement lubrifié à la graisse (6) sur la base de la durée déterminée de la phase de brassage.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2539679 B1
- EP 2283336 B1

- US 20190234463 A1

**Non-patent literature cited in the description**

- **S. CHATRA K. R.** ; **P. M. LUGT**. Channeling behavior of lubricating greases in rolling bearings: Identification and characterization. *Tribology International*, 2020, vol. 143